# DEMANDE DE BREVET EUROPEEN

(11) **EP 1 748 171 A1**
(43) Date de publication de la demande: **31.01.2007**
(21) Numéro de dépôt: 06291120.1
(22) Date de dépôt: 07.07.2006
(51) Int. Cl.: F02D 41/00, F02D 21/08, F02M 25/07, F02D 41/22

(54) **Procédé de protection d'une vanne de recirculation de gaz d'échappement et dispositif de mise en oeuvre**

(30) Priorité: 25.07.2005 FR 0507881
(71) Demandeur: Valeo Systèmes de Contrôle Moteur, 95520 Osny (FR)
(72) Inventeur: Albert, Laurent, 95810 Vallangoujard (FR); Machet, Francois, 78300 Poissy (FR)
(74) Mandataire: Parzy, Benjamin Alain

(57) **Abrégé**

L'invention concerne un procédé de protection d'une vanne de recirculation de gaz d'échappement (10) comportant l'étape de maintenir la vanne fermée si un paramètre (R) représentatif d'une température de la vanne dépasse un seuil prédéterminé.

## Description

L'invention concerne un procédé de protection d'une vanne de recirculation de gaz d'échappement (appelée également vanne RGE), ainsi qu'un dispositif de mise en oeuvre.

### ARRIERE-PLAN DE L'INVENTION

Une telle vanne RGE est disposée sur une dérivation de la tuyauterie d'échappement d'un moteur thermique pour permettre l'admission dans les cylindres du moteur thermique d'une certaine quantité de gaz d'échappement de façon à faire baisser la température de pointe atteinte lors de la combustion dans les cylindres et ainsi diminuer la production d'oxydes d'azote.

Dans certaines circonstances de fonctionnement (véhicule à l'arrêt, mélange pauvre), les gaz d'échappement peuvent atteindre une température élevée qui contribue à une augmentation sensible de la température atteinte par la vanne RGE (notamment son moteur électrique et ses composants électroniques), ce qui peut induire une diminution appréciable de la durée de vie de la vanne RGE.

### OBJET DE L'INVENTION

L'invention a pour objet un procédé de protection d'une vanne RGE permettant d'éviter les augmentations critiques de température de la vanne RGE.

### BREVE DESCRIPTION DE L'INVENTION

En vue de la réalisation de ce but, on propose selon l'invention un procédé de protection d'une vanne de recirculation de gaz d'échappement comportant l'étape de maintenir la vanne fermée si un paramètre représentatif d'une température de la vanne dépasse un seuil prédéterminé.

La fermeture de la vanne bloque le débit de gaz à travers la vanne de sorte que le transfert de chaleur du gaz vers la vanne s'en trouve notablement diminué, ce qui provoque une diminution de la température de la vanne.

Il suffit donc de maintenir la vanne momentanément fermée jusqu'à ce que le paramètre représentatif de la température de la vanne RGE repasse le seuil prédéterminé. Ce dernier est avantageusement choisi de sorte que la vanne n'atteigne jamais des températures susceptibles d'induire une diminution notable de la durée de vie de la vanne RGE.

On préserve ainsi la durée de vie de la vanne RGE, au prix toutefois d'une augmentation momentanée de la température de pointe de la combustion, et donc de la production d'oxydes d'azote.

### BREVE DESCRIPTION DES DESSINS

L'invention sera mieux comprise à la lumière de la description qui suit en référence aux figures des dessins annexés parmi lesquelles :
- la figure 1 est une schéma du circuit d'admission et d'échappement d'un moteur thermique équipé d'une vanne RGE ;
- la figure 2 est une vue de détail de la figure 1 au niveau de la vanne RGE.

### DESCRIPTION DETAILLEE DE L'INVENTION

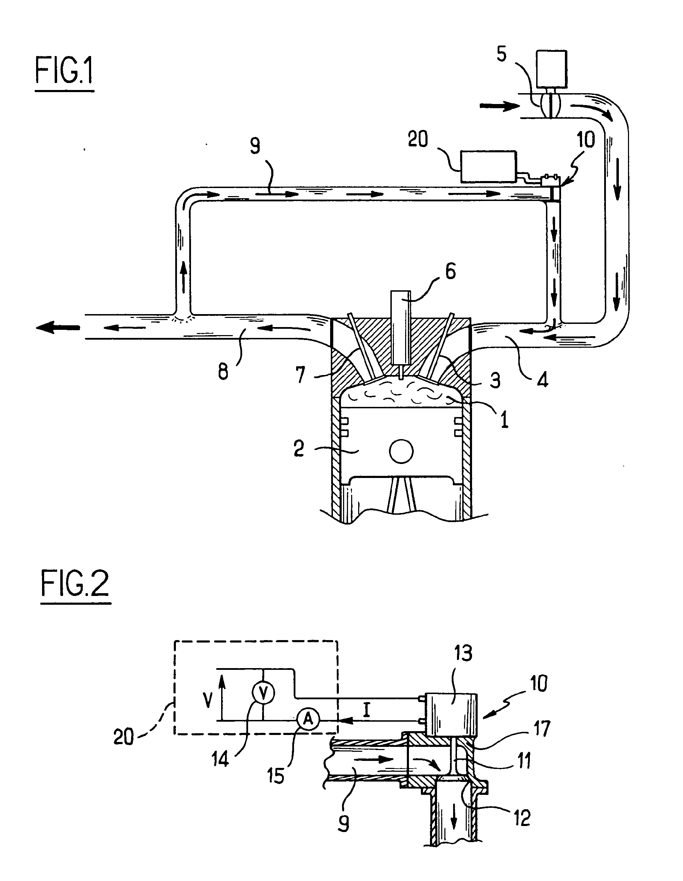

En référence à la figure 1, et de façon connue en soi, les moteurs thermiques comportent au moins une chambre de combustion 1 dont le volume interne varie au gré des déplacements d'un piston coulissant 2. Une soupape d'admission 3 est adaptée à ouvrir sélectivement un passage entre la chambre de combustion 1 et une tubulure d'admission 4 pour admettre de l'air dans la chambre de combustion 1. Une vanne d'admission 5 placée sur la tubulure d'amission 5 permet de réguler la quantité d'air admise dans la chambre de combustion 1.

L'air admis dans la chambre de combustion 1 est mélangé à du carburant provenant d'un injecteur 6, pour former un mélange combustible, les gaz résultant de la combustion de ce mélange sont expulsés de la chambre de combustion via une soupape d'échappement 7 adaptée à ouvrir sélectivement un passage entre la chambre de combustion 1 et une tubulure d'échappement 8. Une dérivation 9 s'étend de façon connue en soi depuis la tubulure d'échappement 8 vers la tubulure d'admission 4 pour transférer une partie des gaz d'échappement dans la tubulure d'admission 4. Sur cette dérivation 9 est disposée une vanne de recirculation de gaz d'échappement 10 (appelée ici vanne RGE) pour réguler la quantité de gaz d'échappement transférée dans la tubulure d'admission 4.

Comme cela est visible à la figure 2, la vanne RGE 10 comporte une soupape 11 adaptée à coopérer avec un siège 12 de la conduite ou corps de vanne 17 pour fermer complètement le passage des gaz d'échappement. La soupape 11 est actionnée par un moteur électrique 13 commandé par un calculateur 20 pour placer la soupape soit dans la position fermée illustrée ici, soit dans une position ouverte pour laisser passer une quantité donnée de gaz d'échappement vers la tubulure d'admission 4.

Dans certaines circonstances, les gaz d'échappement peuvent atteindre des températures élevées qui contribuent à échauffer la soupape 11 et le corps de vanne 17. La soupape 11 et le corps 17 transmettent la chaleur au moteur électrique 13 et, si il est disposé à proximité, au calculateur 20. La température atteinte dans la vanne RGE 10 peut atteindre un niveau critique susceptible de diminuer notablement la durée de vie des divers composants de la vanne.

Selon l'invention, le calculateur 20 de commande de la vanne RGE 10 est adapté à maintenir la soupape 11 fermée lors qu'un paramètre représentatif de la température de la vanne RGE 10 atteint un seuil prédéterminé.

Ici, le paramètre retenu est la résistance électrique R du moteur électrique 13, dont on sait qu'elle est proportionnelle à la température atteinte par le moteur électrique 13. A cet effet, le calculateur 20 comporte, comme cela est schématisé à la figure 2, un organe de mesure de tension 14 et un organe de mesure de courant 15. La résistance R est estimée en effectuant le rapport de la tension de commande V du moteur électrique 13 mesurée à l'aide d'un organe de mesure de tension 14 et de l'intensité I du courant parcourant le moteur électrique 13 mesurée à l'aide d'un organe de mesure d'intensité 15 : R=V/I.

Un seuil de résistance Rmax est programmé dans le calculateur 20, et si la résistance R mesurée dépasse le seuil Rmax, le calculateur 20 est adapté à maintenir la soupape 11 fermée.

On a constaté que ce maintien fermé provoque une diminution progressive de la température de la vanne RGE 10, et donc de la résistance R. Dès que la résistance R est redescendue au dessous du seuil Rmax, le calculateur 20 est programmé pour opérer de nouveau la vanne RGE 10 de façon conventionnelle.

Ainsi, au prix d'une coupure momentanée de la recirculation des gaz d'échappement, on parvient à empêcher des montées en température critiques de la vanne RGE 10 qui pourraient induire une diminution notable de la durée de vie de celle-ci.

L'invention n'est pas limitée à ce qui vient d'être décrit, mais bien au contraire englobe toute variante entrant dans le cadre défini par les revendications.

En particulier, bien que le paramètre représentatif de la température de la vanne RGE pris en compte ici est la résistance du moteur électrique, on pourra utiliser tout autre paramètre comme un paramètre directement lié à la température d'un des éléments constitutifs de la vanne RGE, comme par exemple la dilatation d'un élément structural, ou encore la mesure d'une sonde de température disposée dans ou à proximité de la vanne RGE.

## Revendications

1. Procédé de protection d'une vanne de recirculation de gaz d'échappement (10), **caractérisé en ce qu'**il comporte l'étape de maintenir la vanne fermée si un paramètre (R) représentatif d'une température de la vanne dépasse un seuil prédéterminé.

2. Procédé selon la revendication 1, dans lequel le paramètre (R) représentatif est directement lié à une température d'un des éléments constitutifs (13) de la vanne.

3. Procédé selon la revendication 2, appliqué à une vanne actionnée par un moteur électrique (13), dans lequel le paramètre est une résistance (R) du moteur électrique.

4. Procédé selon la revendication 3, dans lequel la résistance (R) du moteur électrique (13) est estimée en effectuant le rapport entre une tension de commande (V) du moteur électrique et une intensité (I) d'un courant circulant dans le moteur électrique.

5. Dispositif de protection d'une vanne de recirculation de gaz d'échappement (10), **caractérisé en ce qu'**il comporte des moyens (20) pour maintenir la vanne fermée si un paramètre (R) représentatif d'une température de la vanne dépasse un seuil prédéterminé.

6. Dispositif selon la revendication 5, dans lequel le paramètre (R) représentatif est directement lié à une température d'un des éléments constitutifs de la vanne.
